# EUROPEAN PATENT APPLICATION

(11) **EP 4 769 298 A1**
(43) Date of publication of application: **01.07.2026**
(21) Application number: 24917408.7
(22) Date of filing: 30.08.2024
(51) Int. Cl.: G06T 5/80, G06T 7/11, G06V 10/25, G06T 7/536, G06T 7/20, H04N 23/67, H04N 23/69

(54) **METHOD AND ELECTRONIC DEVICE FOR CORRECTING DISTORTION OF IMAGE**

(30) Priority: 09.01.2024 KR 20240003628
(71) Applicant: Samsung Electronics Co., Ltd, Suwon-si, Gyeonggi-do 16677 (KR)
(72) Inventor: KIM, Younggeol, Suwon-si, Gyeonggi-do 16677 (KR); CHOI, Kwangpyo, Suwon-si, Gyeonggi-do 16677 (KR)
(74) Representative: Gulde & Partner
(86) International application number: PCT/KR2024/013076
(87) International publication number: WO 2025/150649

(57) **Abstract**

A method and electronic apparatus may be provided, the method includes obtaining a first image, generating a projection image based on the first image, in which perspective distortion of the first image is corrected, generating a cognitive map according to a plurality of objects in the first image, wherein the cognitive map divides the first image into a plurality of areas of a first plurality of types, generating first mesh information for correcting the first image based on the projection image and the cognitive map, wherein the first mesh information comprises movement information for a plurality of pixel positions, and generating an output image by correcting the first image based on the first mesh information.

## Description

### TECHNICAL FIELD

The disclosure relates to an image processing method, and in particular, to a method and electronic apparatus for correcting image distortion.

### BACKGROUND ART

Electronic apparatuses may obtain an image from light collected through a lens. Electronic apparatuses may identify light collected through a lens by using an image sensor. Electronic apparatuses may generate an image by processing an electrical signal from an image sensor.

Image distortion may occur due to optical characteristics of a lens during a process of generating an image through the lens. For example, image distortion may include lens distortion, perspective distortion, or the like. Lens distortion may be related to the refractive action of the lens, and thus, the type of distortion may vary according to the type of lens. Perspective distortion may include distortion that occurs due to the distance between an object and a camera or the position of an object relative to the field of view of a camera.

The above information is provided only as background information to aid in understanding the disclosure. No determination and assertion will be made as to whether any of the foregoing constitutes prior art with respect to the disclosure.

### DISCLOSURE OF INVENTION

### SOLUTION TO PROBLEM

According to an embodiment of the disclosure, a method performed by an electronic apparatus of correcting image distortion is provided. The method may include obtaining a first image. The method may include generating a projection image based on the first image, in which perspective distortion of the first image is corrected. The method may include generating a cognitive map according to a plurality of objects in the first image. The cognitive map may divide the first image into a plurality of areas of a first plurality of types. The method may include generating first mesh information for correcting the first image based on the projection image and the cognitive map. The first mesh information may comprise movement information for a plurality of pixel positions. The method may include generating an output image by correcting the first image based on the first mesh information. The movement information may be determined at different levels according to the first plurality of types.

According to an embodiment of the disclosure, an electronic apparatus for correcting image distortion is provided. The electronic apparatus may include at least one processor including processing circuitry; and memory comprising one or more storage medium storing at least one instruction that, when executed by the at least one processor individually or collectively, cause the electronic apparatus to obtain a first image. The at least one instruction executed by the at least one processor individually or collectively, cause the electronic apparatus to generate a projection image based on the first image in which perspective distortion of the first image is corrected. The at least one instruction executed by the at least one processor individually or collectively, cause the electronic apparatus to generate a cognitive map according to a plurality of objects in the first image. The cognitive map may divide the first image into a plurality of areas of a first plurality of types. The at least one instruction executed by the at least one processor individually or collectively, cause the electronic apparatus to generate first mesh information for correcting the first image based on the projection image and the cognitive map. The first mesh information comprises movement information for a plurality of pixel positions. The at least one instruction executed by the at least one processor individually or collectively, cause the electronic apparatus to generate an output image by correcting the first image based on the first mesh information. The movement information may be determined at different levels according to the first plurality of types.

According to an embodiment of the disclosure, a computer-readable recording medium having recorded thereon a program for executing the method on a computer is provided.

### BRIEF DESCRIPTION OF DRAWINGS

FIG. 1 is a schematic diagram to describe an electronic apparatus for processing image distortion, according to an embodiment of the disclosure.
FIG. 2 is a flowchart of a method of correcting image distortion according to an embodiment of the disclosure.
FIG. 3 is a diagram to describe lens distortion according to an embodiment of the disclosure.
FIG. 4 is a diagram to describe perspective distortion according to an embodiment of the disclosure.
FIG. 5 is a block diagram of an electronic apparatus for correcting image distortion, according to an embodiment of the disclosure.
FIG. 6 is a diagram to describe a projection image according to an embodiment of the disclosure.
FIG. 7 is a diagram to describe map information according to an embodiment of the disclosure.
FIG. 8 is a diagram to describe mesh information according to an embodiment of the disclosure.
FIG. 9 is a diagram to describe a process of correcting an image by using mesh information, according to an embodiment of the disclosure.
FIG. 10 is a diagram to describe a process of processing an image by using inpainting, according to an embodiment of the disclosure.
FIG. 11 is a diagram to describe an inpainting technique according to an embodiment of the disclosure.
FIG. 12 is a diagram to describe a process of an electronic apparatus to display and store an image, according to an embodiment of the disclosure.
FIG. 13 is a diagram to describe a process of processing continuously obtained images, according to an embodiment of the disclosure.
FIG. 14 is a diagram of components of an electronic apparatus according to an embodiment of the disclosure.
FIG. 15 is a diagram of components of an electronic apparatus according to an embodiment of the disclosure.

### MODE FOR THE INVENTION

Throughout the disclosure, the expression "at least one of a, b or c" indicates "a", "b", "c", "a and b", "a and c", "b and c", "a, b, and c", or variations thereof.

In the disclosure, the expression "a and/or b" may indicate "a", "b", or "a and b". The expression "a and/or b" may also indicate "at least one of a or b".

The terms used in the disclosure are those general terms currently widely used in the art in consideration of functions in regard to the disclosure, but the terms may vary according to the intention of those of ordinary skill in the art, precedents, or new technologies in the art. Also, some terms may be arbitrarily selected by the applicant, and in this case, the meaning of the selected terms will be described in the detailed description of the disclosure. Thus, the terms used in the disclosure should be understood not as simple names but based on the meaning of the terms and the overall description of the disclosure.

As used herein, the singular forms "a", "an" and "the" are intended to include the plural forms as well, unless the context clearly indicates otherwise. The terms including ordinal numbers, such as "first" and "second", as used herein may be used to describe various components, but the components should not be limited by those terms. The above terms are used only to distinguish one component from another.

Throughout the disclosure, when a portion "includes" a component, another component may be further included, rather than excluding the existence of the other component, unless otherwise described. The terms "unit" "module" as used herein refer to units that perform at least one function or operation, which may be implemented as hardware or software or as a combination of hardware and software.

The expression "configured (or set) to" as used herein may be interchangeably used with "suitable for", "having the capacity to", "designed to", "adapted to", "made to", or "capable of" according to the given situation. The expression "configured (or set) to" may not necessarily mean "specifically designed to" in terms of hardware. Alternatively, in some situations, the expression "a system configured to" may refer to a system that "can" operate together with another apparatus or components. For example, the phrase "a processor configured (or set) to perform A, B and C" may refer to a dedicated processor (for example, an embedded processor) for performing A, B and C, or a general purpose processor (for example, a central processing unit (CPU) or an application processor) that may perform A, B and C by executing one or more software programs stored in memory.

Throughout the disclosure, when a component is referred to as being "connected" or "joined" to another component, the component may be directly connected or joined to the other component, but unless otherwise described, it should be understood that the components may be connected or joined by means of another component therebetween.

Like reference numerals in the drawings denote like components throughout the specification. The size of each component does not perfectly reflect an actual size. In each drawing, the same or corresponding component is denoted by the same reference numeral.

The advantages and features of the disclosure and methods of achieving the advantages and features will become apparent with reference to an embodiment of the disclosure described in detail below with reference to the accompanying drawings. However, the disclosure is not limited to the embodiments described below and may be implemented in various different forms. The embodiment of the disclosure are provided to convey the scope of the disclosure to those of ordinary skill in the art. An embodiment of the disclosure may be defined by the claims.

Throughout the disclosure, each block of flowchart illustrations and combinations of blocks in the flowchart illustrations may be implemented by computer program instructions. The computer program instructions may be provided to a processor of a general-purpose computer, special purpose computer, or other programmable data processing equipment, and the instructions, which are executed via the processor of the computer or other programmable data processing equipment, may generate means for performing functions specified in the flowchart block(s). The computer program instructions may also be stored in a computer-usable or computer-readable memory that may direct a computer or other programmable data processing equipment to function in a particular manner, and the instructions stored in the computer-usable or computer-readable memory produce a manufactured article including instruction means that perform the functions specified in the flowchart block(s). The computer program instructions may also be embedded in a computer or other programmable data processing equipment.

In the disclosure, each block of flowchart illustrations may represent a module, segment, or portion of code, which includes one or more executable instructions for implementing specified logical function(s). According to an embodiment of the disclosure, the functions specified in the blocks may occur out of order. For example, two blocks shown in succession may be executed substantially concurrently or may sometimes be executed in the reverse order, according to the functionality involved.

The term "unit" used in an embodiment of the disclosure may refer to a software component or a hardware component such as a field programmable gate array (FPGA) or an application specific integrated circuit (ASIC), and the "unit" may perform a specific function. In addition, the "unit" is not limited to software or hardware. The "unit" may be configured to be provided on an addressable storage medium or may be configured to execute one or more processors. According to an embodiment of the disclosure, the "unit" may include, by way of example, object-oriented software components, class components, and task components, and processes, functions, attributes, procedures, subroutines, segments of a program code, drivers, firmware, a micro code, circuitry, data, a database, data structures, tables, arrays, and variables. Functions provided by a specific component or specific "unit" may be combined to reduce the number of components or may be separated into additional components. According to an embodiment of the disclosure, the functions of a "unit" may be executed by one or more processors.

Hereinafter, the embodiment of the disclosure will be described in detail with reference to the accompanying drawings such that one of ordinary skill in the art may implement the disclosure. The disclosure may, however, be embodied in many different forms and should not be construed as limited to the embodiment of the disclosure set forth herein. In addition, like reference numerals in the drawings denote like components throughout the specification. Also, reference numerals used in the drawings are only intended to describe the drawings, and different reference numerals used in different drawings are not intended to indicate different components. The disclosure will now be described more fully with reference to the accompanying drawings.

Functions related to artificial intelligence according to the disclosure are performed through a processor and memory. The processor may include one or more processors. The one or more processors may include a general-purpose processor such as a central processing unit (CPU), an application processor (AP), or a digital signal processor (DSP), a graphics-dedicated processor such as a graphics processing unit (GPU) or a vision processor (VPU), or an Al-dedicated processor such as a neural processing unit (NPU). The one or more processors may control such that input data is processed according to previously defined operating rules or Al models stored in memory. When the one or more processors include a processor dedicated to AI, the processor dedicated to Al may be designed in a hardware structure for processing of an Al model.

The previously defined operating rules or Al models are characterized in that they are created through learning. Creating the Al model through training means that an Al model is trained using a plurality of training data by a learning algorithm so that a predefined operation rule or Al model set to perform a wanted characteristic (or purpose) is created. Such learning may be performed in a device on which Al according to the disclosure is performed, or may be performed through a separate server and/or system. Examples of the learning algorithm include supervised learning, unsupervised learning, semi-supervised learning, or reinforcement learning, but are not limited to the above-described examples.

The Al model may include a plurality of neural network layers. Each of the plurality of neural network layers has a plurality of weight values, and may perform a neural network operation using an operation result of a previous layer and an operation between the plurality of weight values. The plurality of weights of the plurality of neural network layers may be optimized based on a learning result of the Al models. For example, the plurality of weights may be updated to reduce or minimize a loss value or a cost value obtained from the Al model during a learning process. An artificial neural network may include a deep neural network (DNN), for example, a convolutional neural network (CNN), a deep neural network (DNN), a recurrent neural network (RNN), a restricted Boltzmann machine (RBM), a deep belief network (DBM), a bidirectional recurrent deep neural network (BRDNN), deep Q-networks, and the like, but is not limited to the aforementioned examples.

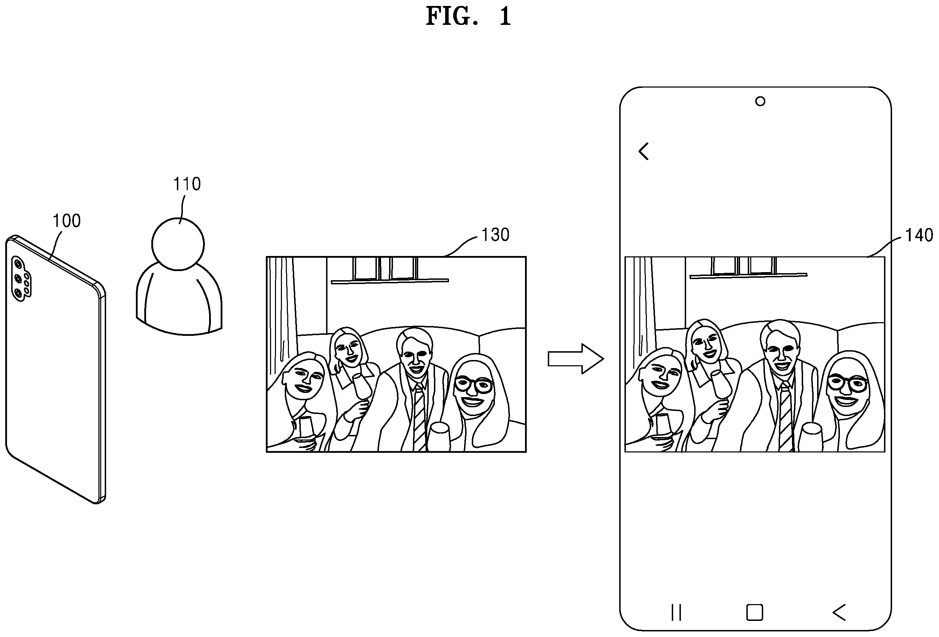

FIG. 1 is a schematic diagram to describe an electronic apparatus for processing image distortion, according to an embodiment of the disclosure.

In an embodiment of the disclosure, an electronic apparatus 100 may provide, to a user 110, a service that provides a distortion-corrected output image. A method of correcting image distortion, according to the disclosure, includes processing distortion of an image captured by a user 110 and providing a distortion-corrected output image to the user 110.

Referring to FIG. 1, the user 110 may capture an image by using the electronic apparatus 100. The electronic apparatus 100 may obtain an input image 130.

In an embodiment of the disclosure, the input image 130 may be obtained by using a camera of the electronic apparatus 100. The input image 130 may be a raw image of light refracted through a lens of the electronic apparatus 100 and identified by an image sensor. The input image 130 may be an image obtained by processing the raw image using an image signal processor (ISP).

In an embodiment of the disclosure, the input image 130 may be an image stored in memory of the electronic apparatus 100. The electronic apparatus 100 may obtain the input image 130 stored in the memory.

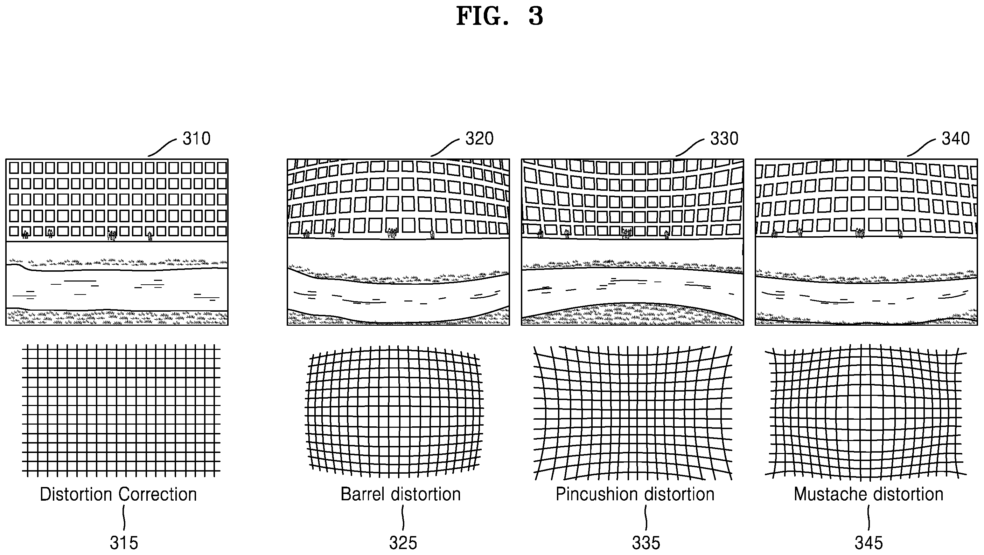

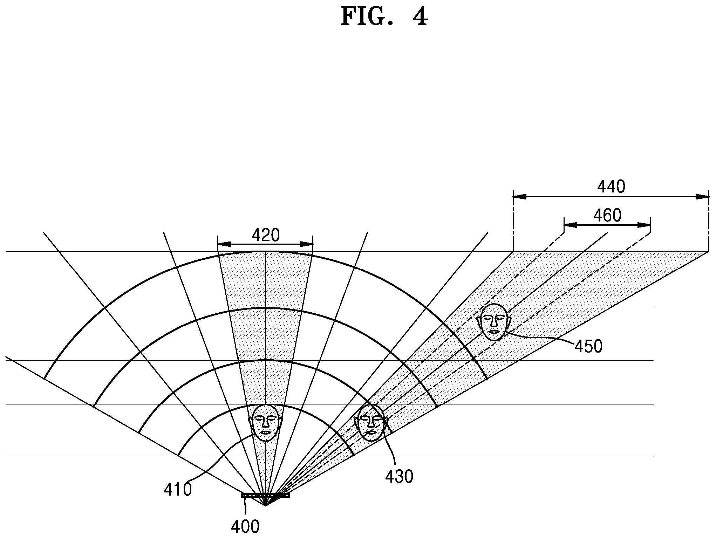

The input image 130 may include lens distortion and/or perspective distortion. For example, the input image 130 may be expressed so that the size of an object located on the outer edge thereof is larger than an actual size. Lens distortion and perspective distortion of an image are described in detail with reference to FIGS. 3 and 4.

The electronic apparatus 100 may generate an output image 140 obtained by correcting the input image 130. For example, the electronic apparatus 100 may generate the output image 140 in which lens distortion and/or perspective distortion is corrected.

In an embodiment of the disclosure, the electronic apparatus 100 may generate the output image 140 by moving pixels included in the input image 130. The electronic apparatus 100 may differently determine a degree of movement of pixels according to an object included in the input image 130. For example, the electronic apparatus 100 may determine movement of pixel positions to reduce distortion with respect to a face, hair, or body of a person. The electronic apparatus 100 may determine that pixels do not move (for example, remain fixed in position) for an object, such as a straight line, a triangle, a rectangle, or a circle, that is easy for the user 110 to recognize changes in a shape of the object. The electronic apparatus 100 may minimize image defects that may occur when distortion of the input image 130 is corrected by differently determining a degree of movement of pixels according to the object.

In an embodiment of the disclosure, the electronic apparatus 100 may display the output image 140 through a display. The electronic apparatus 100 may display the output image 140 in which perspective distortion is corrected, rather than the input image 130 including perspective distortion.

In an embodiment of the disclosure, the electronic apparatus 100 may store the output image 140 in the memory. The electronic apparatus 100 may display the input image 130 or the output image 140 through the display and store the output image 140 in the memory. For example, the electronic apparatus 100 may display the input image 130 through the display and correct perspective distortion based on the image being captured. For example, the electronic apparatus 100 may correct perspective distortion in the input image 130 in real time and display the output image 140 through the display.

In an embodiment of the disclosure, the electronic apparatus 100 may be any of various types of apparatuses that correct image distortion. For example, the electronic apparatus 100 may be implemented as any of various types and forms of electronic apparatuses. The electronic apparatus 100 may include apparatuses capable of processing images, such as a smart television (TV), a smartphone, a tablet personal computer (PC), a laptop PC, a glasses-type display, a head mounted display (HMD), a set-top box, or a desktop PC, but is not limited thereto. The electronic apparatus 100 may include, but is not limited to, a camera, and may be connected to an apparatus including a camera or may include an apparatus capable of obtaining images via memory.

In an embodiment of the disclosure, the electronic apparatus 100 may include a server. For example, the electronic apparatus 100 may include a server that provides cloud computing services. The electronic apparatus 100 may perform an operation, program, and/or function at the request of another electronic apparatus (for example, a client apparatus), transmit the result of the performance to the other electronic apparatus, and display the result. For example, the electronic apparatus 100 may perform an operation of correcting an image according to the disclosure and display the corrected image through a display of the other electronic apparatus.

In an embodiment of the disclosure, operations of correcting an image may be separately performed by a plurality of electronic apparatuses. For example, among operations of the disclosure, an "operation A" may be performed by an "electronic apparatus A", and an "operation B" may be performed by an "electronic apparatus B".

Operations of the electronic apparatus 100 to correct distortion of an input image are described in more detail through the drawings to be described below and descriptions thereof.

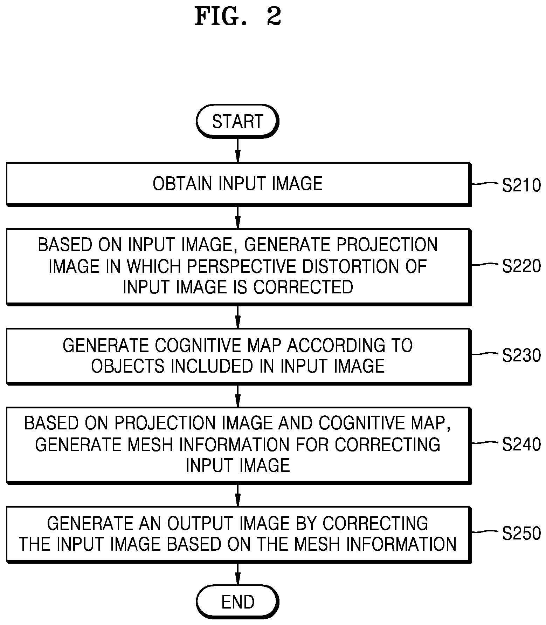

FIG. 2 is a flowchart of a method of correcting image distortion according to an embodiment of the disclosure.

Operations of the electronic apparatus 100 to correct image distortion are schematically described with reference to FIG. 2, and a detailed description of each operation is described with reference to the following drawings.

In operation S210, the electronic apparatus 100 may obtain an input image. In an embodiment of the disclosure, the input image may include perspective distortion.

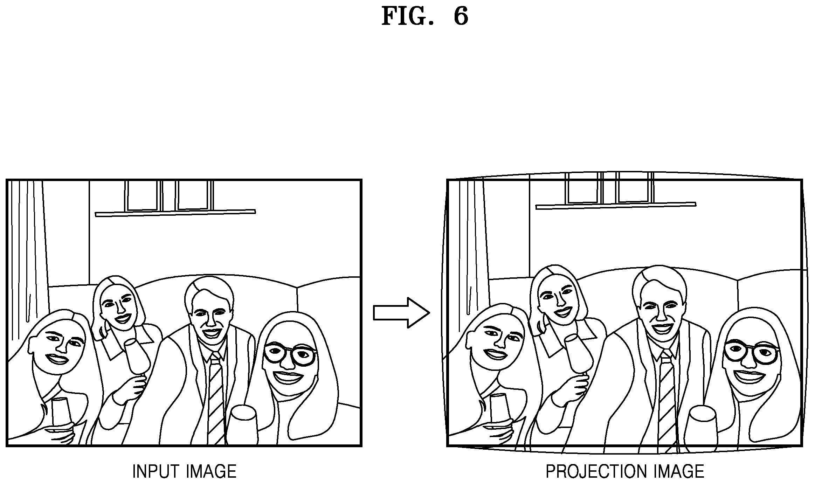

In operation S220, the electronic apparatus 100 may generate, based on the input image, a projection image in which perspective distortion of the input image is corrected. In an embodiment of the disclosure, the electronic apparatus 100 may determine the projection image based on a lens through which the input image is captured. For example, the projection image may be differently determined according to the type of lens (for example, a telephoto lens, wide-angle lens, or the like) used to capture an image or lens specifications (for example, focal length, field of view, or the like). The projection image according to an embodiment of the disclosure is described in detail with reference to FIG. 6.

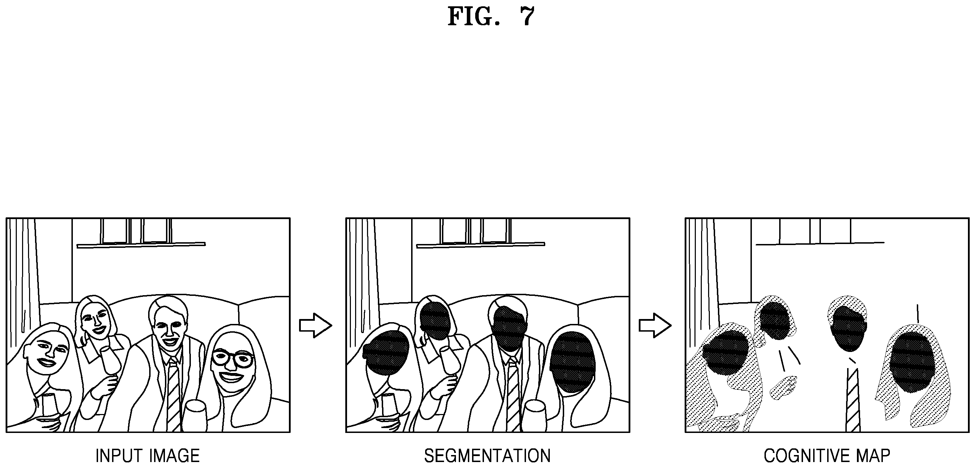

In operation S230, the electronic apparatus 100 may generate a cognitive map according to objects included in the input image, wherein the cognitive map divides the input image into two or more types of areas. For example, the cognitive map may include an area of interest including a human face in the input image, and a maintenance area including a geometric configuration including at least one of a straight line, a curve, a polygon, a circle, or an ellipse. The cognitive map according to an embodiment of the disclosure is described in detail with reference to FIG. 7.

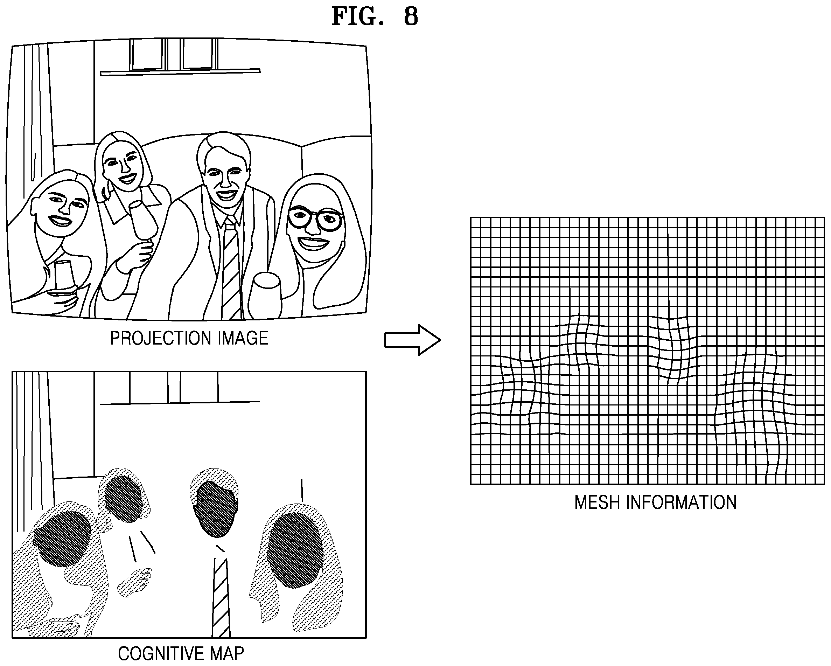

In operation S240, the electronic apparatus 100 may generate, based on the projection image and the cognitive map, mesh information for correcting the input image. The mesh information may include movement information for a plurality of pixel positions. The mesh information may include movement information for pixel positions to obtain a corrected output image from the input image. The movement information may be determined at different levels according to the first plurality of types. The mesh information according to an embodiment of the disclosure is described in detail with reference to FIG. 8.

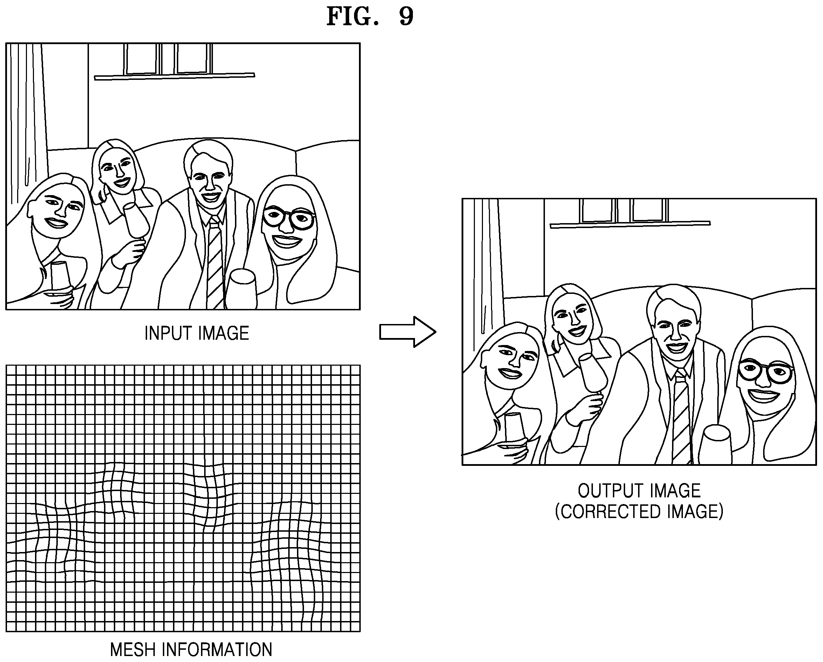

In operation S250, the electronic apparatus 100 may generate an output image by correcting the input image based on the mesh information. The electronic apparatus 100 may generate, by using the input image and the mesh information, an output image obtained by correcting the input image. For example, the electronic apparatus 100 may generate an output image, by changing pixel positions in the input image by using the movement information for pixel positions included in the mesh information. The output image according to an embodiment of the disclosure is described in detail with reference to FIG. 9.

In an embodiment of the disclosure, additional operations may be included.

FIG. 3 is a diagram to describe lens distortion according to an embodiment of the disclosure.

Referring to FIG. 3, distorted images (for example, first, second, and third distorted images 320, 330, and 340) are shown according to the type of lens.

Lens distortion may include distortion that occurs when light passing through a spherical lens is incident on a flat surface. The type of lens distortion may be determined according to the shape of a lens. Lens distortion may include at least one of barrel distortion, pincushion distortion, or mustache distortion.

The first distorted image 320 may include barrel distortion. Barrel distortion may include distortion where image magnification decreases as an object is farther away from an optical axis. Barrel distortion may occur in a wide-angle lens. A central area of the first distorted image 320 has a high magnification as if the central area is enlarged, and an outer area of the first distorted image 320 has a low image magnification. An object located in the central area of the first distorted image 320 may be shown larger than an object located in the outer area of the first distorted image 320.

First mesh information 325 may include movement information for pixel positions from a distortion-corrected image 310 to the first distorted image 320. The first mesh information 325 may include movement information for pixel positions where barrel distortion occurs.

The second distorted image 330 may include pincushion distortion. Pincushion distortion may include distortion where image magnification increases as an object is farther away from the optical axis. Pincushion distortion may occur in a telephoto lens. A central area of the second distorted image 330 has a low magnification as if the central area is reduced, and an outer area of the second distorted image 330 has a high image magnification. An object located in the central area of the second distorted image 330 may be shown smaller than an object located in the outer area of the second distorted image 330.

Second mesh information 335 may include movement information for pixel positions from the distortion-corrected image 310 to the second distorted image 330. The second mesh information 335 may include movement information for pixel positions where pincushion distortion occurs.

The third distorted image 340 may include mustache distortion. Mustache distortion may include distortion where image magnification decreases as an object moves farther away from the optical axis, but then increases again after a certain distance. Mustache distortion may be shown as a combination of barrel distortion and pincushion distortion. Mustache distortion may occur in an aspherical lens. A central area of the third distorted image 340 has a high magnification as if the central area is enlarged, and the image magnification decreases and then increases again toward an outer area of the third distorted image 340. In the third distorted image 340, the size of an object may decrease and then increase again from the central area to the outer area.

Third mesh information 345 may include movement information for pixel positions from the distortion-corrected image 310 to the third distorted image 340. The third mesh information 345 may include movement information for pixel positions where mustache distortion occurs.

In an embodiment of the disclosure, the electronic apparatus 100 may correct image distortion by performing pixel warping. In the disclosure, pixel warping may include an operation of mapping each pixel of an image to a new position. The electronic apparatus 100 may correct distortion by moving coordinates of pixels of the image.

In an embodiment of the disclosure, the electronic apparatus 100 may correct lens distortion by using an ISP.

In an embodiment of the disclosure, the electronic apparatus 100 may correct lens distortion by using a processor other than the ISP. For example, the electronic apparatus 100 may correct lens distortion by using a central processing unit regardless of whether lens distortion is corrected by using the ISP.

FIG. 4 is a diagram to describe perspective distortion according to an embodiment of the disclosure.

Referring to FIG. 4, light may pass through a lens and be identified by using an image sensor 400. In an embodiment of the disclosure, the image sensor 400 may include an image sensor of the electronic apparatus 100. An area identified by using the image sensor 400 may be determined by a field of view of the lens. For example, when light passes through a wide-angle lens having a 120-degree field of view, the image sensor 400 may identify an area corresponding to the 120-degree field of view.

Referring to FIG. 4, for convenience of description, a first object 410 and a second object 430 represent objects of the same size that are located at the same distance from the image sensor 400 along the optical axis but at different angles relative to the optical axis. A first phase 420 and a second phase 440 represent phases respectively generated by the first object 410 and the second object 430. The sizes of the first phase 420 and the second phase 440 may be respectively determined according to the positions of the first object 410 and the second object 430. For example, the sizes of the first object 410 and the second object 430 are the same, but the size of the second phase 440 with respect to the second object 430 located at the outer edge of the optical axis is identified as being larger than the size of the first phase 420 with respect to the first object 410 located at the center of the optical axis. Perspective distortion may include a phenomenon in which the size of a phase is distorted according to the position of an object.

Perspective distortion may occur independently of lens distortion. Both the telephoto lens and the wide-angle lens may cause perspective distortion. Perspective distortion may occur at different levels based on the focal length and field of view of a lens. In an embodiment of the disclosure, the electronic apparatus 100 may correct the image based on a field of view and/or focal length of a lens through which an input image is captured. The electronic apparatus 100 may differently determine the level of correction according to the field of view and/or focal length.

Perspective distortion may occur at different levels according to a distance from an object. The closer the object is to the image sensor 400, the higher the degree of distortion may be. A third object 450 is located at the same angle relative to the optical axis as the second object 430 but is located farther away from the image sensor 400. The size of a third phase 460 with respect to the third object 450 is smaller than the size of the second phase 440. Accordingly, when compared to the second object 430 that is closer to the image sensor 400, the third object 450 is relatively less distorted.

In an embodiment of the disclosure, the electronic apparatus 100 may generate a projection image based on depth information about the object. For example, the electronic apparatus 100 may differently determine the level of correction for distortion according to the distance by using the depth information about the object. The electronic apparatus 100 may determine depth information about an object included in the input image. The electronic apparatus 100 may generate a projection image based on the depth information.

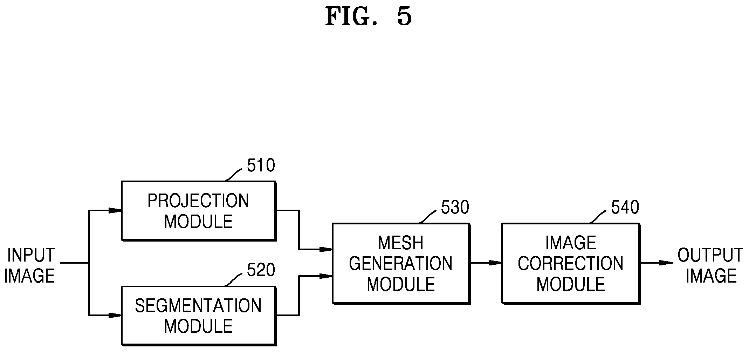

FIG. 5 is a block diagram of an electronic apparatus for correcting image distortion, according to an embodiment of the disclosure.

Referring to FIG. 5, an output image may be generated from an input image by using a projection module 510, a segmentation module 520, a mesh generation module 530, and/or an image correction module 540.

In an embodiment of the disclosure, the projection module 510 may generate a projection image from the input image. The projection image may be an image in which perspective distortion of the input image is corrected. For example, the projection image may be a corrected image in which perspective distortion of the input image is minimized.

The projection module 510 may generate a projection image based on the type of lens through which the input image is captured, lens specifications, and/or depth information (or distance information) about an object. As described above with reference to FIG. 4, perspective distortion may be differently determined according to the type of lens (for example, a telephoto lens, a wide-angle lens, a fish-eye lens, or the like) and/or the lens specifications (for example, a field of view, focal length, or the like). For example, the narrower the field of view of the lens, the less perspective distortion may be. For example, the longer the focal length of the lens, the less perspective distortion may be. The projection module 510 may determine a correction parameter based on the type of lens, the lens specifications, and/or the depth information about the object. The projection module 510 may generate a projection image by applying the correction parameter to the input image.

In an embodiment of the disclosure, the projection module 510 may generate a projection image in which perspective distortion is corrected. However, because the projection image is a corrected image to reduce perspective distortion, awkward portions may occur according to perception of a user. For example, a geometric configuration such as a straight line, a triangle, a rectangle, or a circle may be deformed due to correction of perspective distortion. For example, compression may occur that causes a straight line to bend or a circle to become an ellipse.

In an embodiment of the disclosure, by using the projection module 510, the segmentation module 520, the mesh generation module 530, and/or the image correction module 540, a distortion-corrected image of which quality does not deteriorate according to perception of the user may be generated.

In an embodiment of the disclosure, the segmentation module 520 may generate a cognitive map based on the input image. The cognitive map may be divided into two or more areas according to objects included in the input image. For example, the cognitive map may include an area of interest including a human face included in the input image, and a maintenance area including a geometric configuration including at least one of a straight line, a curve, a polygon, a circle, or an ellipse.

In an embodiment of the disclosure, the segmentation module 520 may identify objects included in the input image. For example, the segmentation module 520 may identify a human face included in the input image, or a geometric configuration.

In an embodiment of the disclosure, the segmentation module 520 may determine the types of extracted areas according to the types of objects respectively included in the extracted areas. When an object included in an area is a human face, the segmentation module 520 may determine the area as an area of interest. When an object included in an area is a geometric configuration, the segmentation module 520 may determine the area as a maintenance area. When an object included in an area is a repeating pattern rather than the geometric configuration, the segmentation module 520 may determine the area as a low correction area.

In an embodiment of the disclosure, the segmentation module 520 may generate a cognitive map including information about the types of extracted areas. For example, the cognitive map may include values indicating the types of areas in the input image. For example, the cognitive map may include indices indicating the types of areas, such that the area of interest represents a value of 0 and the maintenance area represents a value of 1.

In an embodiment of the disclosure, the projection image generated by the projection module 510 and the cognitive map generated by the segmentation module 520 may be transmitted to the mesh generation module 530.

In an embodiment of the disclosure, the mesh generation module 530 may generate mesh information based on the projection image and the cognitive map. The mesh information may include movement information for pixel positions to obtain a corrected output image from the input image. The movement information for pixel positions may be determined in units of pixels or in units of blocks including pixels.

In an embodiment of the disclosure, the mesh generation module 530 may divide each of the input image and the projection image into a plurality of blocks. The mesh generation module 530 may determine a movement vector based on a first block of the input image and a second block of the projection image corresponding to the first block. The mesh generation module 530 may determine a movement vector for each block. The mesh generation module 530 may generate mesh information including the movement vector.

In an embodiment of the disclosure, the mesh information may include movement information for pixel positions determined so that movement of pixel positions included in the area of interest is greater than movement of pixel positions included in the low correction area. For example, the mesh generation module 530 may generate mesh information to include movement information for pixel positions so that pixels included in the area of interest are corrected to be identical to those of the projection image. For example, the mesh generation module 530 may generate mesh information to include movement information for pixel positions wherein pixels included in the low correction area are moved to a position midway between the projection image and the input image.

In an embodiment of the disclosure, the mesh information may include movement information for pixel positions determined so that movement of pixel positions included in the low correction area is greater than movement of pixel positions included in the maintenance area.

In an embodiment of the disclosure, the mesh information may include movement information for pixel positions wherein pixels included in the maintenance area are fixed in positions. For example, the pixels included in the maintenance area may have the same position in the input image and the output image.

In an embodiment of the disclosure, the mesh generation module 530 may transmit the mesh information to the image correction module 540. The image correction module 540 may generate, by using the input image and the mesh information, an output image obtained by correcting the input image.

The image correction module 540 may generate an output image by adjusting pixel positions in the input image by using the mesh information. The image correction module 540 may generate an output image, by changing pixel positions in the input image by using movement information corresponding to areas included in the mesh information. The image correction module 540 may generate an output image so that the input image corresponding to the area of interest is moved like the projection image. The image correction module 540 may generate an output image so that the input image corresponding to the maintenance area has a fixed position. The image correction module 540 may generate an output image so that pixel positions in the input image corresponding to the low correction area are moved with reference to the area of interest and the maintenance area.

Operations or processes described in the disclosure as being performed by at least one of the projection module 510, the segmentation module 520, the mesh generation module 530, or the image correction module 540 may be understood to be performed by a processor of the electronic apparatus 100. For example, the processor of the electronic apparatus 100 may function as at least one of the projection module 510, the segmentation module 520, the mesh generation module 530, or the image correction module 540. However, the disclosure is not limited thereto, and in an embodiment of the disclosure, sub-components or modules included in at least one of the projection module 510, the segmentation module 520, the mesh generation module 530, or the image correction module 540 may be software units that performdefined functions or roles in the entire program for processing image distortion. In an embodiment of the disclosure, instructions that cause the processor to function as at least one of the projection module 510, the segmentation module 520, the mesh generation module 530, or the image correction module 540 may be stored in the memory. In an embodiment of the disclosure, at least one of the projection module 510, the segmentation module 520, the mesh generation module 530, or the image correction module 540 may be implemented as separate hardware. In an embodiment of the disclosure, each of the projection module 510, the segmentation module 520, the mesh generation module 530, or the image correction module 540 may include various processing circuitry and/or executable program commands.

FIG. 6 is a diagram to describe a projection image according to an embodiment of the disclosure.

Referring to FIG. 6, a projection image corresponding to an input image according to an embodiment of the disclosure is shown.

In an embodiment of the disclosure, the electronic apparatus 100 may generate a projection image by correcting the input image in a direction in which distortion is minimized. For example, when barrel distortion occurs, the electronic apparatus 100 may generate a projection image by moving the input image outward. When pincushion distortion occurs, the electronic apparatus 100 may generate a projection image by correcting the input image to move inward.

In an embodiment of the disclosure, the electronic apparatus 100 may generate a projection image based on the type of lens and/or lens specifications. When the type of lens and/or lens specifications vary, the type of distortion and the degree of distortion may also vary.

In an embodiment of the disclosure, the electronic apparatus 100 may determine a vanishing point of the input image based on at least one of a field of view or focal length of a lens through which the input image is captured. The vanishing point may include a point at which parallel lines in the real world are projected onto an image and converge. The electronic apparatus 100 may determine at least one vanishing point for the input image.

In an embodiment of the disclosure, the electronic apparatus 100 may generate a projection image by correcting the input image based on the vanishing point. The electronic apparatus 100 may correct distortion based on the position of the vanishing point and the position of each pixel included in the input image. When the position of the vanishing point is close to the position of a pixel in the input image, more severe distortion may occur compared to when the positions are far apart from each other. The electronic apparatus 100 may reduce distortion by adjusting pixel positions in the input image so that pixels do not converge on the vanishing point.

Referring to FIG. 6, an input image with barrel distortion has a relatively low image magnification in a central area thereof and a relatively high image magnification in an outer area thereof. Accordingly, the projection image may move such that the image magnifications of the input image are equal or similar to each other. The projection image may be generated by expanding the central area of the input image and moving all of the pixels to the outer area of the input image.

FIG. 7 is a diagram to describe map information according to an embodiment of the disclosure.

In an embodiment of the disclosure, the electronic apparatus 100 may generate a cognitive map based on an input image. The electronic apparatus 100 may segment the input image and generate a cognitive map by using the result of the segmentation. Segmentation may refer to an operation of identifying objects included in an image.

The cognitive map may be classified into a plurality of areas according to the objects included in the input image. In an embodiment of the disclosure, the cognitive map may include an area of interest, a maintenance area, and/or a low correction area.

In an embodiment of the disclosure, the area of interest may include a human face and/or an animal face. The area of interest may include an area with high priority for correction of perspective distortion. When perspective distortion occurs, an area where a user feels awkward may be determined as the area of interest. An object classified as the area of interest may be determined in advance. In the disclosure, the area of interest may be replaced with, but is not limited to, a region of interest (ROI), and may be expressed by various alternative words with the same meaning.

In an embodiment of the disclosure, the maintenance area may include a geometric configuration including a curve, a straight line, a polygon, a circle, and/or an ellipse. The maintenance area may include an area in which no correction for perspective distortion is performed. Because perspective distortion is not performed differently from the area of interest, an area where the user feels awkward may be determined as the maintenance area. For example, when a structure or object in the shape of a straight line, which the user recognizes in advance, is bent through distortion correction, the user may feel awkward. An object classified as the maintenance area may be determined in advance. Objects included in the maintenance area may include not only an object (for example, a tree, a utility pole, or the like) that has meaning, but also a boundary (for example, a straight boundary between a road and a sidewalk) between objects that have meaning or a pattern (for example, a straight pattern included in a tie) within an object that has meaning. In the disclosure, the maintenance area may be replaced with, but is not limited to, a heterogeneous area, and may be expressed by various alternative words with the same meaning.

In an embodiment of the disclosure, the low correction area may include a solid color pattern and/or a repeating pattern rather than the geometric configuration included in the maintenance area. The low correction area may include an area with low priority for correction of perspective distortion. When perspective distortion occurs, an area where the user feels relatively less awkward may be determined as the low correction area. For example, when compared to a human face being enlarged by perspective distortion or a straight line being bent by correction, position movement of the solid color pattern may feel less awkward to the user. An object classified as the low correction area may be determined in advance. In the disclosure, the low correction area may be replaced with, but is not limited to, a homogeneous area, and may be expressed by various alternative words with the same meaning.

In an embodiment of the disclosure, the electronic apparatus 100 may identify objects included in the input image. In an embodiment of the disclosure, the electronic apparatus 100 may identify objects included in the input image by using an artificial intelligence (AI) model. For example, the electronic apparatus 100 may identify objects included in the input image by using a U-Net model. The electronic apparatus 100 may identify objects by using a trained Al model to identify objects corresponding to the area of interest, the maintenance area, and/or the low correction area. For example, the Al model may identify an object by using training data that identifies human faces and geometric configurations.

In an embodiment of the disclosure, the electronic apparatus 100 may detect a geometric configuration by converting an image into a new coordinate system. For example, the electronic apparatus 100 may identify a geometric configuration, such as a straight line or a circle, from the input image by using Hough transform.

In an embodiment of the disclosure, the electronic apparatus 100 may determine the position of an object and the type of object. The electronic apparatus 100 may determine the position of an object and the type of object in units of pixels.

In an embodiment of the disclosure, the electronic apparatus 100 may extract areas respectively corresponding to the identified objects. For example, the electronic apparatus 100 may extract, from the input image, an area corresponding to a human face. The electronic apparatus 100 may determine the types of the extracted areas according to the types of objects respectively included in the extracted areas. For example, an extracted area corresponding to a human face may be determined as the area of interest. The electronic apparatus 100 may generate a cognitive map including information about the types of the extracted areas. The cognitive map may include types of areas that respective pixels of the input image represent.

In an embodiment of the disclosure, the electronic apparatus 100 may determine weights for the extracted areas. In an embodiment of the disclosure, the electronic apparatus 100 may determine a high positive weight for the area of interest. The larger the area of interest, the larger a weight value may be. For example, an area of interest corresponding to a face close to the camera has a large size and may thus represent a larger weight value. The electronic apparatus 100 may determine a negative weight for the maintenance area. The electronic apparatus 100 may determine a low positive weight for the low correction area.

In an embodiment of the disclosure, the electronic apparatus 100 may determine, for an area representing a large weight, movement information for pixel positions where distortion is to be corrected, and determine movement information to fix pixel positions for an area representing a negative weight. The electronic apparatus 100 may determine movement information for pixel positions by preferentially determining an area representing a large weight, in consideration of a plurality of weight values. The electronic apparatus 100 may determine pixel positions to be fixed in an area representing a negative weight, separately from the priority of an area representing a positive weight.

FIG. 8 is a diagram to describe mesh information according to an embodiment of the disclosure.

In an embodiment of the disclosure, the electronic apparatus 100 may generate mesh information by using a projection image and a cognitive map. The mesh information may include movement information for pixel positions to convert pixels of an input image into pixels of an output image.

In an embodiment of the disclosure, the electronic apparatus 100 may divide the input image and the projection image into a plurality of sizes. For example, the electronic apparatus 100 may divide the input image and the projection image into blocks of a defined size (for example, blocks of 16 x 16 pixels). For example, the electronic apparatus 100 may divide the input image and the projection image into 64 equal parts each.

In an embodiment of the disclosure, the electronic apparatus 100 may determine a movement vector between blocks of the projection image corresponding to blocks of the input image. For example, the movement vector may include the degree to which the position of a first sample of a block of the projection image is changed based on a first position (for example, an upper-left sample position) of a block of the input image. A plurality of movement vectors may be determined. For example, the movement vector may include the degree to which the positions of a plurality of corresponding samples of a block of the projection image are changed based on the positions of a plurality of samples of a block of the input image.

In an embodiment of the disclosure, the electronic apparatus 100 may determine mesh information based on the types of areas identified in the cognitive map. The electronic apparatus 100 may determine, as movement information for mesh information, a movement vector corresponding to an area of interest. The electronic apparatus 100 may not determine, as movement information for mesh information, a movement vector corresponding to a maintenance area. The electronic apparatus 100 may determine the maintenance area not to move or may determine a degree of movement to be less than the movement vector. The electronic apparatus 100 may determine movement information for mesh information corresponding to a low correction area with reference to other areas. For example, the electronic apparatus 100 may not apply a movement vector to a low correction area present between maintenance areas, with reference to movement vectors of surrounding maintenance areas. The electronic apparatus 100 may apply a movement vector to a low correction area present between areas of interest, with reference to movement vectors of surrounding low correction areas.

Referring to FIG. 8, the electronic apparatus 100 may determine, as movement information for mesh information, a movement vector for a human face corresponding to an area of interest included in the cognitive map. The electronic apparatus 100 may not determine a movement vector as movement information for mesh information for a geometric configuration corresponding to a maintenance area included in the cognitive map. The mesh information may store movement information for pixel positions so that positions are the same in the input image and the output image.

In an embodiment of the disclosure, the electronic apparatus 100 may determine mesh information based on a weight of the cognitive map. The electronic apparatus 100 may determine mesh information so that the larger the weight of the cognitive map, the more movement information may be the same as the movement vector. Referring to FIG. 8, the larger an area in the area of interest, the less the movement vector may be deformed, and the less deformed movement vector may be determined as movement information for mesh information. For example, for the mesh information of FIG. 8, movement information may be determined such that a human face with a large area of interest is strongly corrected for perspective distortion and a human face with a small area of interest is relatively weakly corrected.

FIG. 9 is a diagram to describe a process of correcting an image by using mesh information, according to an embodiment of the disclosure.

In an embodiment of the disclosure, the electronic apparatus 100 may generate an output image (or corrected image) based on an input image and mesh information.

The electronic apparatus 100 may generate an output image by applying, to the input image, movement information for mesh information. The electronic apparatus 100 may generate an output image by applying a movement vector to pixel positions in the input image.

In an embodiment of the disclosure, the electronic apparatus 100 may determine an output image in units of pixels. The electronic apparatus 100 may identify, from the mesh information, a movement vector corresponding to each pixel of the input image. The electronic apparatus 100 may generate an output image by applying a movement vector to each pixel of the input image and adjusting each pixel position.

In an embodiment of the disclosure, the electronic apparatus 100 may determine an output image in units of blocks. The electronic apparatus 100 may identify, from the mesh information, a movement vector corresponding to each block including a plurality of pixels of the input image. The electronic apparatus 100 may generate an output image by applying a movement vector to each block of the input image and adjusting the positions of a plurality of pixels included in each block.

In an embodiment of the disclosure, the electronic apparatus 100 may generate an output image by applying, to the input image, a matrix representing mesh information. The electronic apparatus 100 may obtain a matrix representing pieces of movement information included in the mesh information. The electronic apparatus 100 may generate an output image by calculating a matrix on the input image.

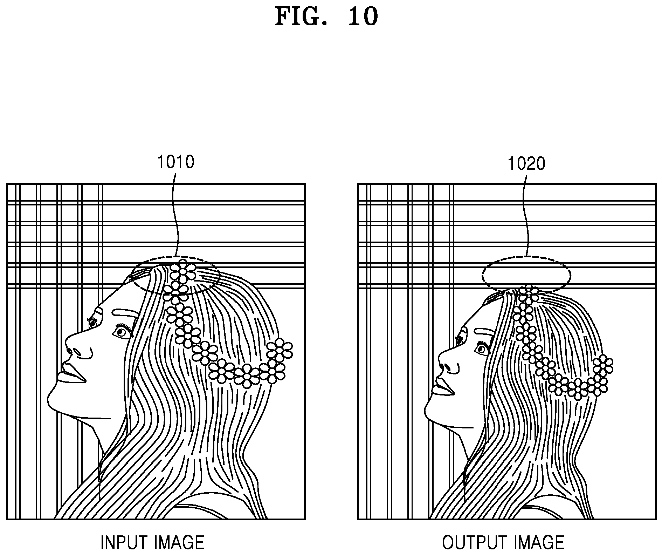

FIG. 10 is a diagram to describe a process of processing an image by using inpainting, according to an embodiment of the disclosure.

In an embodiment of the disclosure, the electronic apparatus 100 may generate an output image without applying mesh information to some portions of the input image. The electronic apparatus 100 may determine pixels for a blank area by using the input image without adjusting the position of the input image.

Referring to FIG. 10, perspective distortion may occur in a human face in the input image. The electronic apparatus 100 may correct perspective distortion for the human face. The electronic apparatus 100 may generate an output image in which perspective distortion for the human face included in the input image is corrected. For convenience of description, the input image and the output image may show a background with a geometric configuration in the form of straight lines behind the human face.

The electronic apparatus 100 may fix pixel positions by determining the geometric configuration as a maintenance area, and adjust the pixel positions by determining the human face as an area of interest. In this example, a first area 1010 of the input image may represent a face, but a second area 1020 of the output image may represent a background. In order for the electronic apparatus 100 to generate an output image while fixing pixel positions corresponding to the maintenance area, pixels corresponding to the second area 1020 may be determined. In the disclosure, the second area 1020 may be referred to as a blank area or an area for inpainting. Inpainting may include an operation of generating pixels of an image by using surrounding pixels.

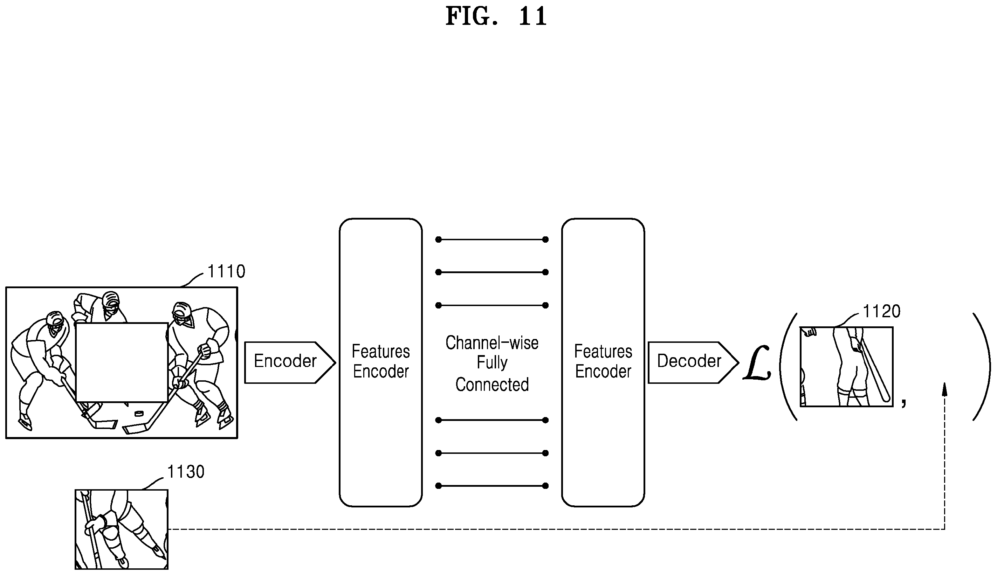

In an embodiment of the disclosure, the electronic apparatus 100 may generate a value of the second area 1020 by using an Al model. The Al model used by the electronic apparatus 100 to perform inpainting is described in detail with reference to FIG. 11.

FIG. 11 is a diagram to describe an inpainting technique according to an embodiment of the disclosure.

In an embodiment of the disclosure, the electronic apparatus 100 may determine a sample of a blank area of an input image by using an Al model. Referring to FIG. 11, when a blank area is present in an image, a process of training an Al model that determines a sample of the blank area is shown. The Al model may be trained by the electronic apparatus 100. The Al model may be trained through an external server and transmitted to the electronic apparatus 100.

In an embodiment of the disclosure, a training data set for training the Al model may include a training image 1110 including a blank area and an actual image 1120 of the blank area. The electronic apparatus 100 or a server that performs training may generate a predicted image 1130 for the blank area of the training image 1110 by using the Al model. The electronic apparatus 100 or the server that performs training may generate a parameter of the Al model so that errors between the actual image 1120 and the predicted image 1130 are minimized.

The electronic apparatus 100 may generate a predicted image for the blank area of the input image by using the trained Al model. In an embodiment of the disclosure, the electronic apparatus 100 may generate an output image from the input image by using mesh information. The electronic apparatus 100 may identify whether a blank area is present in the output image (or corrected input image). The electronic apparatus 100 may determine pixels of the blank area. The electronic apparatus 100 may generate pixels of the blank area by using the Al model for the blank area.

Referring to FIG. 10, the electronic apparatus 100 may generate pixel values for the second area 1020 by using the Al model.

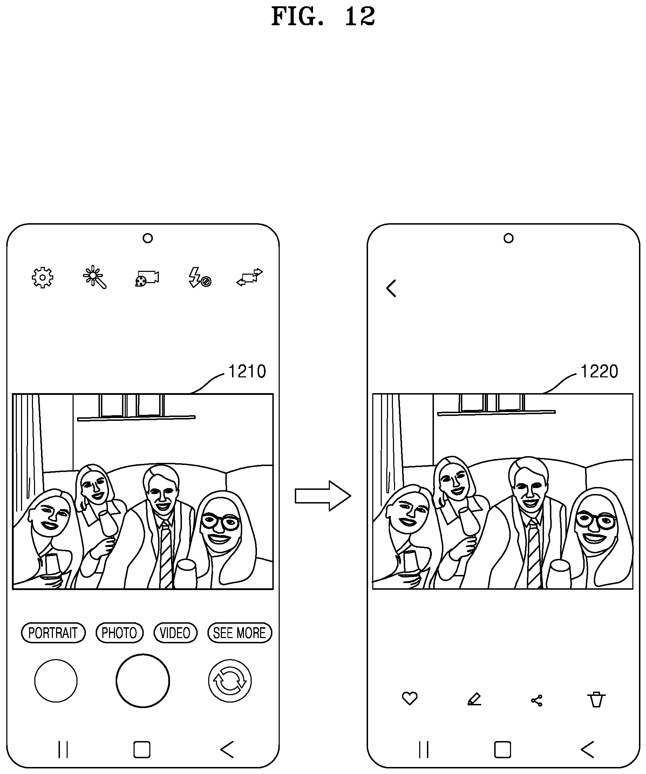

FIG. 12 is a diagram to describe a process of an electronic apparatus to display and store an image, according to an embodiment of the disclosure.

Referring to FIG. 12, a first user interface (UI) 1210 may include an interface that displays an image obtained through a camera of the electronic apparatus 100. A second UI 1220 may include an interface that displays a stored image on the electronic apparatus 100.

In an embodiment of the disclosure, the electronic apparatus 100 may display several dozens of frames per second through the first UI1210 according to a camera setting. For example, when the camera setting is 60 fps, the first UI 1210 may display 60 images per second.

In an embodiment of the disclosure, the electronic apparatus 100 may perform the method of correcting perspective distortion, described with reference to FIGS. 1 to 11, on only some images selected from among images displayed through the first UI 1210. The electronic apparatus 100 may not be able to correct perspective distortion in real time on all images displayed on the first UI 1210. The electronic apparatus 100 may perform the method of correcting perspective distortion in FIGS. 1 to 11 on images captured per defined intervals based on the camera setting.

In an embodiment of the disclosure, the electronic apparatus 100 may perform perspective distortion correction on the captured images and store the images. Images displayed through the second UI 1220 may be images in which perspective distortion is corrected.

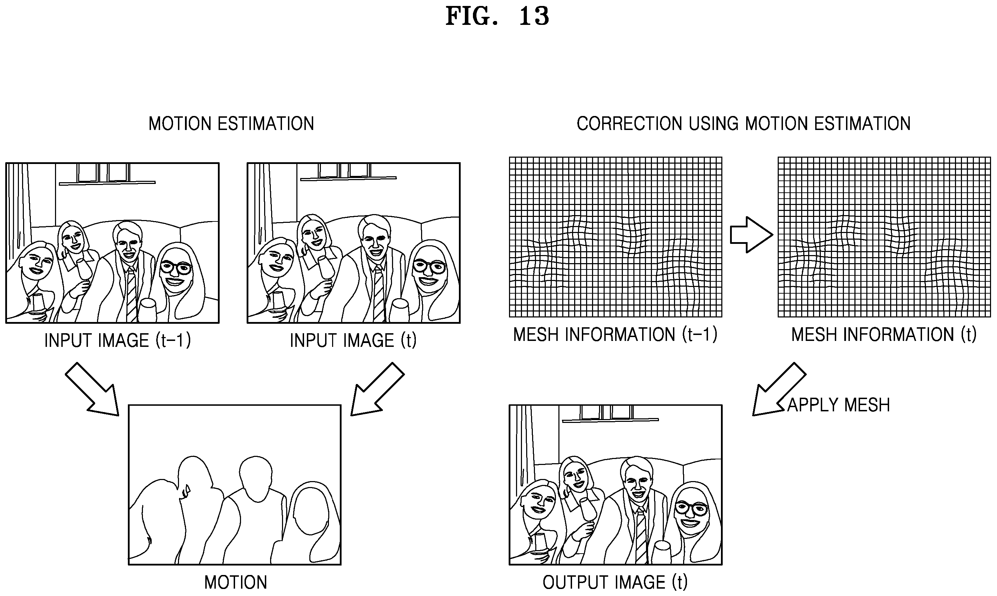

In an embodiment of the disclosure, the electronic apparatus 100 may correct perspective distortion by using movement estimation information to be described with reference to FIG. 13, and display the result on the first UI 1210.

FIG. 13 is a diagram to describe a process of processing continuously obtained images, according to an embodiment of the disclosure.

In an embodiment of the disclosure, the electronic apparatus 100 may obtain a new image after an input image. Referring to FIG. 13, the electronic apparatus 100 may obtain a t-th captured input image after a (t-1)-th captured image.

In an embodiment of the disclosure, the electronic apparatus 100 may determine a motion vector between the new image and the input image. The electronic apparatus 100 may determine a motion vector through a difference between the new image and the input image. For example, the electronic apparatus 100 may obtain a motion vector through a difference between the t-th captured input image and the (t-1)-th captured image.

In an embodiment of the disclosure, the electronic apparatus 100 may generate mesh information about the new image, by correcting mesh information by using the motion vector. For example, mesh information about the t-th captured input image may be obtained by correcting mesh information about the (t-1)-th captured image by using the motion vector.

In an embodiment of the disclosure, the electronic apparatus 100 may generate an output image for the new image based on mesh information about the new image, which is obtained by using the motion vector. The electronic apparatus 100 may reduce the amount of computation and correct perspective distortion by correcting perspective distortion using the motion vector. The electronic apparatus 100 may display in real time a photo in which perspective distortion is corrected.

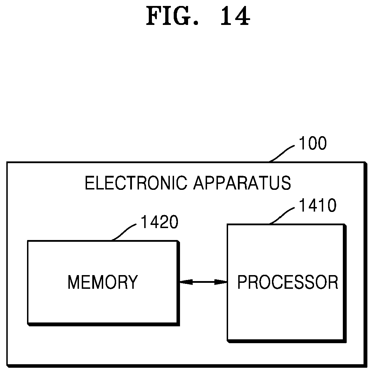

FIG. 14 is a diagram of components of an electronic apparatus according to an embodiment of the disclosure.

In an embodiment of the disclosure, the electronic apparatus 100 may include a processor 1410 and memory 1420.

The processor 1410 may control all operations of the electronic apparatus 100. For example, the processor 1410 may control all operations of the electronic apparatus 100 to correct image distortion by executing one or more instructions of a program stored in the memory 1420. One or more processors 1410 may be provided.

For example, the processor 1410 may include, but is not limited to, at least one of a CPU, a microprocessor, a GPU, an ASIC, a DSP, a digital signal processing device (DSPD), a programmable logic device (PLD), an FPGA, an AP, an NPU, or an Al-specific processor designed with a hardware structure for processing Al models.

In addition, although not shown in FIG. 14, the electronic apparatus 100 may further include additional components to perform operations described in the aforementioned embodiments. For example, the electronic apparatus 100 may further include a display, a camera, a microphone, a speaker, an input/output interface, or the like. The display may output an image signal on a screen of the electronic apparatus 100 under control by the processor 1410.

When the method according to an embodiment of the disclosure includes a plurality of operations, the plurality of operations may be performed by one processor or may be performed by a plurality of processors. For example, when a first operation, a second operation, and a third operation are performed by the method according to an embodiment of the disclosure, all of the first operation, the second operation, and the third operation may be performed by a first processor, or the first operation and the second operation may be performed by the first processor (for example, a general-purpose processor) and the third operation may be performed by a second processor (for example, an Al-dedicated processor). In this regard, the Al-dedicated processor, which is an example of the second processor, may perform operations for training/inference of Al models. However, the embodiment of the disclosure is not limited thereto.

The one or more processors 1410 according to the disclosure may be implemented as single-core processors or may be implemented as multi-core processors.

When the method according to an embodiment of the disclosure includes a plurality of operations, the plurality of operations may be performed by a single core or may be performed by a plurality of cores included in the one or more processors.

The at least one processor 1410, according to the embodiment of the disclosure may include various processing circuitry and/or multiple processors. For example, the term "processor" as used in this document including in the claims may include various processing circuitry including at least one processor, and one or more of the at least one processor are configured to individually and/or collectively perform various functions described herein in a distributed manner. As used herein, when "a processor", "at least one processor", and "one or more processors" are described as being configured to perform various functions, these terms encompass, for example, without limitation, situations where one processor performs all of the functions. Some of the cited functions and others of the cited functions may be performed by different processors, and a single processor may also perform all of the cited functions. Additionally, at least one processor may include a combination of processors that perform various enumerated/disclosed functions, for example in a distributed manner. The at least one processor may execute program commands to accomplish or perform various functions.

The memory 1420 may store instructions readable by the processor 1410, a data structure, and program code. Operations performed by the processor 1410 may be implemented by executing instructions or codes of the program stored in the memory 1420.

The memory 1420 may include a flash memory, a hard disk type memory, a multimedia card micro type memory, or a card type memory (for example, secure digital (SD) memory or extreme digital (XD) memory), and may include a nonvolatile memory including at least one of read-only memory (ROM), electrically erasable programmable ROM (EEPROM), programmable ROM (PROM), magnetic memory, magnetic disk, or optical disk, and a volatile memory such as random-access memory (RAM) or static RAM (SRAM).

The memory 1420 may store one or more instructions and/or programs that cause the electronic apparatus 100 to operate to correct image distortion. For example, the memory 1420 may store instructions and/or programs to implement operations to correct image distortion. In addition, the memory 1420 may further store instructions and/or programs to implement functions of a prompt generation module (not shown).

In an embodiment of the disclosure, the processor 1410 may be configured to obtain an input image by executing the one or more instructions included in the memory 1420. The processor 1410 may be configured to generate, based on the input image, a projection image in which perspective distortion of the input image is corrected, by executing the one or more instructions included in the memory 1420. The processor 1410 may be configured to generate a cognitive map according to objects included in the input image, wherein the cognitive map divides the input image into two or more types of areas, by executing the one or more instructions included in the memory 1420. The processor 1410 may be configured to generate, based on the projection image and the cognitive map, mesh information for correcting the input image, by executing the one or more instructions included in the memory 1420. The processor 1410 may be configured to generate, by using the input image and the mesh information, an output image obtained by correcting the input image, by executing the one or more instructions included in the memory 1420.

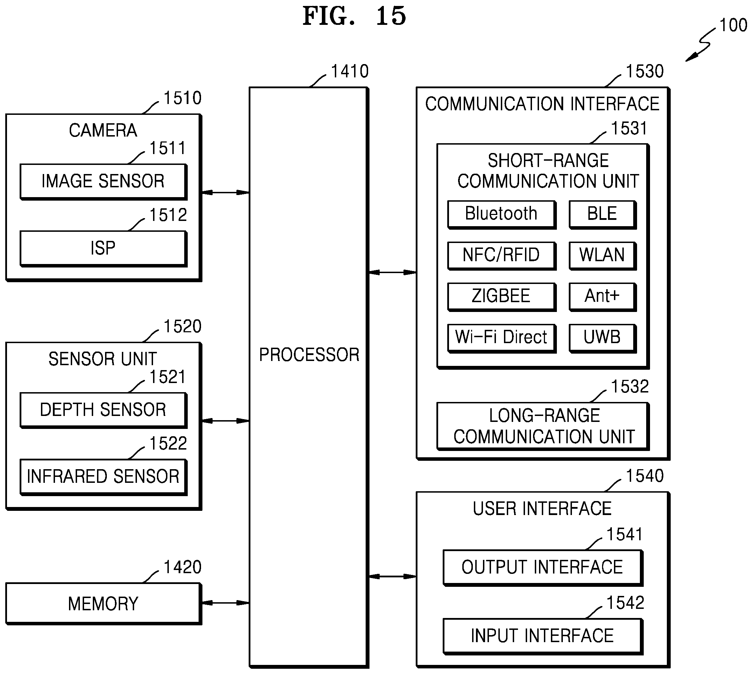

In an embodiment of the disclosure, the electronic apparatus 100 may include other components in addition to the processor 1410 and the memory 1420. In an embodiment of the disclosure, components that may be included in the electronic apparatus 100 are described in detail with reference to FIG. 15.

FIG. 15 is a diagram of components of an electronic apparatus according to an embodiment of the disclosure.

As shown in FIG. 15, the electronic apparatus 100 according to an embodiment of the disclosure may further include, in addition to the processor 1410 and the memory 1420, a camera 1510, a sensor unit 1520, a communication interface 1530, and/or a user interface 1540.

The processor 1410 may control operations of the electronic apparatus 100. The processor 1410 may control the camera 1510, the sensor unit 1520, the communication interface 1530, the user interface 1540, and the memory 1420, by executing the programs stored in the memory 1420.

The memory 1420 may store programs for processing and controlling the processor 1410 and may also store pieces of input/output data (for example, a cognitive map or mesh information). The memory 1420 may also store Al models. For example, the memory 1420 may also store an Al model for object recognition or an Al model for inpainting.

The camera 1510 may refer to a device that obtains at least one frame. In this regard, the at least one frame may be represented as an image (still image or video) or a photo.

The camera 1510 may include a wide-angle camera and/or a telephoto camera capable of capturing images of the front or back of the electronic apparatus 100. Also, the camera 1510 may include a miniature camera or a pinhole camera. In an embodiment of the disclosure, the electronic apparatus 100 may include a plurality of cameras 1510.

The camera 1510 may include an image sensor 1511 and/or an ISP 1512. The image sensor 1511 may include a device that identifies light transmitted through a lens of the camera 1510. The ISP 1512 may refer to a processor that processes a signal identified by the image sensor 1511. The ISP 1512 may perform first correction on distortion caused by the camera 1510.

The sensor unit 1520 may include a depth sensor 1521 and/or an infrared sensor 1522, but is not limited thereto. The depth sensor 1521 may include a sensor that measures depth information about an object. The infrared sensor 1522 may include a sensor that measures numerical values by using infrared rays. The infrared sensor 1522 may measure depth information about the object by using infrared rays.

The sensor unit 1520 may obtain depth information by using an ultra-wideband (UWB) sensor. The UWB sensor may measure round-trip time of a UWB signal. The sensor unit 1520 may determine depth information based on the round-trip time of the UWB signal.

The communication interface 1530 may include one or more components that enable communication between the electronic apparatus 100 and a server apparatus (not shown) or between the electronic apparatus 100 and a mobile terminal (not shown). For example, the communication interface 1530 may include a short-range communication unit 1531 and a long-range communication unit 1532.

The short-range communication unit 1531 may include a Bluetooth communication unit, a Bluetooth low energy (BLE) communication unit, a near-field communication (NFC) unit, a wireless local area network (WLAN) (for example, Wi-Fi) communication unit, a Zigbee communication unit, an infrared data association (IrDA) communication unit, a Wi-Fi direct (WFD) communication unit, a UWB communication unit, or an Ant+ communication unit, but the disclosure is not limited thereto.

The long-range communication unit 1532 may include the Internet, a computer network (for example, local area network (LAN) or wide area network (WAN)), or a mobile communication unit, for example. The mobile communication unit may include a 3rd-generation (3G) module, a 4th-generation (4G) module, a 5th-generation (5G) module, a long term evolution (LTE) module, a narrowband Internet of things (NB-loT) module, or an LTE-M module, for example, but the disclosure is not limited thereto.

The user interface 1540 may include an output interface 1541 and an input interface 1542. The output interface 1541 is provided to output audio signals or video signals and may include a display or an audio outputter, for example.

When a display and a touchpad form a layered structure and are configured as a touch screen, the display may be used as the input interface 1542 in addition to the output interface 1541. The display may include at least one of a liquid crystal display, a thin-film transistor-liquid crystal display, a light-emitting diode (LED), an organic LED, a flexible display, a three-dimensional (3D) display, or an electrophoretic display. In addition, the electronic apparatus 100 may include two or more displays according to the implementation form of the electronic apparatus 100.

The audio outputter may output audio data that is received from the communication interface 1530 or stored in the memory 1420. Also, the audio outputter may output an audio signal related to a function performed in the electronic apparatus 100. The audio outputter may include a speaker or a buzzer, for example.

According to an embodiment of the disclosure, the display may display in real time an image captured by the camera 1510 of the electronic apparatus 100 or display an image stored in the memory 1420.

The input interface 1542 is provided to receive an input from a user. The input interface 1542 may include at least one of a keypad, a dome switch, or a touch pad (touch capacitance type, pressure-resistive layer type, infrared sensing type, surface ultrasonic conductive type, integral tension measurement type, or piezoelectric effect type, for example), but the disclosure is not limited thereto.

According to an embodiment of the disclosure, a method, performed by an electronic apparatus, of correcting image distortion is provided. The method may include obtaining an input image. The method may include, based on the input image, generating a projection image in which perspective distortion of the input image is corrected. The method may include, generating a cognitive map according to objects included in the input image, wherein the cognitive map divides the input image into two or more types of areas. The method may include, based on the projection image and the cognitive map, generating mesh information for correcting the input image. The mesh information may include movement information for a pixel position to obtain a corrected output image from the input image. The method may include, by using the input image and the mesh information, generating an output image obtained by correcting the input image. The mesh information may include movement information for a pixel position determined at different levels according to the two or more types of areas divided in the cognitive map.

According to an embodiment of the disclosure, the generating of the cognitive map may include identifying the objects included in the input image. The generating of the cognitive map may include extracting areas respectively corresponding to the identified objects. The generating of the cognitive map may include, according to types of objects respectively included in the extracted areas, determining types of the extracted areas. The generating of the cognitive map may include generating the cognitive map including information about the types of the extracted areas.

According to an embodiment of the disclosure, the cognitive map may include at least one of an area of interest, a maintenance area, or a low correction area. The area of interest may include an area with a high priority for correction of perspective distortion. The maintenance area may include an area in which no correction for perspective distortion is performed. The low correction area may include an area with a low priority for correction of perspective distortion.

According to an embodiment of the disclosure, the determining of the types of the extracted areas may include, when an object included in a first area among the extracted areas is a face, determining the first area as the area of interest. The determining of the types of the extracted areas may include, when an object included in a second area among the extracted areas is a geometric configuration including at least one of a straight line, a curve, a polygon, a circle, or an ellipse, determining the second area as the maintenance area. The determining of the types of the extracted areas may include, when an object included in a third area among the extracted areas is a configuration including a repeating pattern, determining the third area as the low correction area.

According to an embodiment of the disclosure, movement of a pixel position included in the area of interest may be greater than movement of a pixel position included in the low correction area. Movement of a pixel position included in the low correction area may be greater than movement of a pixel position included in the maintenance area. The mesh information may include movement information for a pixel position determined so that a movement of a pixel position included in the area of interest is greater than movement of a pixel position included in the low correction area, and movement information for a pixel position determined so that a movement of a pixel position included in the low correction area is greater than movement of a pixel position included in the maintenance area.

According to an embodiment of the disclosure, a pixel included in the maintenance area may have a fixed position.

According to an embodiment of the disclosure, the generating of the projection image may include, based on at least one of a field of view or a focal length of a lens through which the input image is captured, determining a vanishing point of the input image. The generating of the projection image may include, based on the vanishing point, generating the projection image by correcting the input image.

According to an embodiment of the disclosure, the method may further include dividing each of the input image and the projection image into a plurality of blocks. The method may further include, based on a first block of the input image and a second block of the projection image corresponding to the first block, determining a movement vector. The mesh information may include the movement vector.

According to an embodiment of the disclosure, the generating of the corrected output image may include correcting the input image by using the mesh information. The generating of the corrected output image may include identifying whether a blank area is present in the corrected input image. The generating of the corrected output image may include determining a pixel of the blank area.

According to an embodiment of the disclosure, the method may further include determining depth information about an object included in the input image. According to an embodiment of the disclosure, the method may further include generating the projection image based on the depth information.

According to an embodiment of the disclosure, the method may further include obtaining a new image after the input image. The method may further include determining a motion vector between the new image and the input image. The method may further include generating mesh information about the new image, by correcting the mesh information by using the motion vector.

According to an embodiment of the disclosure, an electronic apparatus for correcting image distortion is provided. The electronic apparatus may include memory storing one or more instructions, and at least one processor. The one or more instructions may be executed by the at least one processor to cause the electronic apparatus to obtain an input image. The one or more instructions may be executed by the at least one processor to cause the electronic apparatus to, based on the input image, generate a projection image in which perspective distortion of the input image is corrected. The one or more instructions may be executed by the at least one processor to cause the electronic apparatus to generate a cognitive map according to objects included in the input image, wherein the cognitive map divides the input image into two or more types of areas. The one or more instructions may be executed by the at least one processor to cause the electronic apparatus to, based on the projection image and the cognitive map, generate mesh information for correcting the input image. The mesh information may include movement information for a pixel position to obtain a corrected output image from the input image. The one or more instructions may be executed by the at least one processor to cause the electronic apparatus to, by using the input image and the mesh information, generate an output image obtained by correcting the input image. The mesh information may include movement information for a pixel position determined at different levels according to the two or more types of areas divided in the cognitive map.

According to an embodiment of the disclosure, the one or more instructions may be executed by the at least one processor to cause the electronic apparatus to identify the objects included in the input image. The one or more instructions may be executed by the at least one processor to cause the electronic apparatus to extract areas respectively corresponding to the identified objects. The one or more instructions may be executed by the at least one processor to cause the electronic apparatus to, according to types of objects respectively included in the extracted areas, determine types of the extracted areas. The one or more instructions may be executed by the at least one processor to cause the electronic apparatus to generate a cognitive map including information about the types of the extracted areas.

According to an embodiment of the disclosure, the cognitive map may include at least one of an area of interest, a maintenance area, or a low correction area. The area of interest may include an area with a high priority for correction of perspective distortion. The maintenance area may include an area in which no correction for perspective distortion is performed. The low correction area may include an area with a low priority for correction of perspective distortion.

According to an embodiment of the disclosure, The one or more instructions may be executed by the at least one processor to cause the electronic apparatus to, when an object included in a first area among the extracted areas is a face, determine the first area as the area of interest. The one or more instructions may be executed by the at least one processor to cause the electronic apparatus to, when an object included in a second area among the extracted areas is a geometric configuration including at least one of a straight line, a curve, a polygon, a circle, or an ellipse, determine the second area as the maintenance area. The one or more instructions may be executed by the at least one processor to cause the electronic apparatus to, when an object included in a third area among the extracted areas is a configuration including a repeating pattern, determine the third area as the low correction area.

According to an embodiment of the disclosure, movement of a pixel position included in the area of interest may be greater than movement of a pixel position included in the low correction area. Movement of a pixel position included in the low correction area may be greater than movement of a pixel position included in the maintenance area. The mesh information may include movement information for a pixel position determined so that a movement of a pixel position included in the area of interest is greater than movement of a pixel position included in the low correction area, and movement information for a pixel position determined so that a movement of a pixel position included in the low correction area is greater than movement of a pixel position included in the maintenance area.

According to an embodiment of the disclosure, a pixel included in the maintenance area may have a fixed position.

According to an embodiment of the disclosure, The one or more instructions may be executed by the at least one processor to cause the electronic apparatus to, based on at least one of a field of view or a focal length of a lens through which the input image is captured, determine a vanishing point of the input image. The one or more instructions may be executed by the at least one processor to cause the electronic apparatus to, based on the vanishing point, generate the projection image by correcting the input image.

According to an embodiment of the disclosure, The one or more instructions may be executed by the at least one processor to cause the electronic apparatus to divide each of the input image and the projection image into a plurality of blocks. The one or more instructions may be executed by the at least one processor to cause the electronic apparatus to, based on a first block of the input image and a second block of the projection image corresponding to the first block, determine a movement vector. The mesh information may include the movement vector.

According to an embodiment of the disclosure, The one or more instructions may be executed by the at least one processor to cause the electronic apparatus to correct the input image by using the mesh information. The one or more instructions may be executed by the at least one processor to cause the electronic apparatus to identify whether a blank area is present in the corrected input image. The one or more instructions may be executed by the at least one processor to cause the electronic apparatus to determine a pixel of the blank area.

According to an embodiment of the disclosure, The one or more instructions may be executed by the at least one processor to cause the electronic apparatus to determine depth information about an object included in the input image. The one or more instructions may be executed by the at least one processor to cause the electronic apparatus to generate the projection image based on the depth information.

According to an embodiment of the disclosure, The one or more instructions may be executed by the at least one processor to cause the electronic apparatus to obtain a new image after the input image. The one or more instructions may be executed by the at least one processor to cause the electronic apparatus to determine a motion vector between the new image and the input image. The one or more instructions may be executed by the at least one processor to cause the electronic apparatus to generate mesh information about the new image, by correcting the mesh information by using the motion vector.

According to an embodiment of the disclosure, a method performed by an electronic apparatus of correcting image distortion is provided. The method may include obtaining a first image. The method may include generating a projection image based on the first image, in which perspective distortion of the first image is corrected. The method may include generating a cognitive map according to a plurality of objects in the first image. The cognitive map may divide the first image into a plurality of areas of a first plurality of types. The method may include generating first mesh information for correcting the first image based on the projection image and the cognitive map. The first mesh information may comprise movement information for a plurality of pixel positions. The method may include generating an output image by correcting the first image based on the first mesh information. The movement information may be determined at different levels according to the first plurality of types.

According to an embodiment of the disclosure, the plurality of areas may correspond to the plurality of objects. The generating the cognitive map may comprises identifying the plurality of objects in the first image. The generating the cognitive map may comprises extracting the plurality of areas. The generating the cognitive map may comprises determining the first plurality of types based on a second plurality of types of the plurality of objects. The generating the cognitive map may comprises generating the cognitive map based on the first plurality of types.

According to an embodiment of the disclosure, the cognitive map may comprise at least one of an area of interest with a high priority for correction of perspective distortion, a maintenance area in which no correction for perspective distortion is performed, or a low correction area with a low priority for correction of perspective distortion.

According to an embodiment of the disclosure, the determining the first plurality of types may comprise determining a first area among the plurality of areas as the area of interest based on a first object in the first area comprising a face. The determining the first plurality of types may comprise determining a second area among the plurality of areas as the maintenance area based on a second object in the second area comprising a geometric configuration. The geometric configuration may comprise at least one of a straight line, a curve, a polygon, a circle, or an ellipse. The determining the first plurality of types may comprise determining a third area among the plurality of areas as the low correction area based on a third object in the third area comprising a repeating pattern.

According to an embodiment of the disclosure, the first mesh information may comprise first movement information and second movement information. The generating the first mesh information may comprise determining the first movement information such that a movement of a first pixel position in the area of interest is greater than a movement of a second pixel position in the low correction area. The generating the first mesh information may comprise determining the second movement information such that a movement of a third pixel position in the low correction area is greater than a movement of a fourth pixel position in the maintenance area.

According to an embodiment of the disclosure, the generating the projection image may comprise determining a vanishing point of the first image based on at least one of a field of view or a focal length of a lens through which the first image is captured. The generating the projection image may comprise generating the projection image based on the vanishing point by correcting the first image.

According to an embodiment of the disclosure, the first mesh information may comprise a movement vector. The generating the first mesh information may comprise dividing each of the first image and the projection image into a plurality of blocks. The generating the first mesh information may comprise determining the movement vector based on a first block of the first image and a second block of the projection image corresponding to the first block.

According to an embodiment of the disclosure, the generating the output image may comprise generating a second image by correcting the first image based on the first mesh information. The generating the first mesh information may comprise identifying whether the second image comprises a blank area. The generating the first mesh information may comprise determining a pixel of the blank area.

According to an embodiment of the disclosure, the method may include determining depth information about an object in the first image. The method may include generating the projection image based on the depth information.

According to an embodiment of the disclosure, the method may include obtaining a third image after the first image. The method may include determining a motion vector between the third image and the first image. The method may include generating second mesh information for the third image based on correcting the first mesh information by using the motion vector.

According to an embodiment of the disclosure, an electronic apparatus for correcting image distortion is provided. The electronic apparatus may include at least one processor including processing circuitry; and memory comprising one or more storage medium storing at least one instruction that, when executed by the at least one processor individually or collectively, cause the electronic apparatus to obtain a first image. The at least one instruction executed by the at least one processor individually or collectively, cause the electronic apparatus to generate a projection image based on the first image in which perspective distortion of the first image is corrected. The at least one instruction executed by the at least one processor individually or collectively, cause the electronic apparatus to generate a cognitive map according to a plurality of objects in the first image. The cognitive map may divide the first image into a plurality of areas of a first plurality of types. The at least one instruction executed by the at least one processor individually or collectively, cause the electronic apparatus to generate first mesh information for correcting the first image based on the projection image and the cognitive map. The first mesh information comprises movement information for a plurality of pixel positions. The at least one instruction executed by the at least one processor individually or collectively, cause the electronic apparatus to generate an output image by correcting the first image based on the first mesh information. The movement information may be determined at different levels according to the first plurality of types.

According to an embodiment of the disclosure, the plurality of areas may correspond to the plurality of objects. The at least one instruction executed by the at least one processor individually or collectively, may cause the electronic apparatus to identify the plurality of objects in the first image. The at least one instruction executed by the at least one processor individually or collectively, may cause the electronic apparatus to extract the plurality of areas. The at least one instruction executed by the at least one processor individually or collectively, may cause the electronic apparatus to determine the first plurality of types based on a second plurality of types of the plurality of objects. The at least one instruction executed by the at least one processor individually or collectively, may cause the electronic apparatus to generate the cognitive map based on the first plurality of types.

According to an embodiment of the disclosure, the cognitive map may comprise at least one of an area of interest with a high priority for correction of perspective distortion, a maintenance area in which no correction for perspective distortion is performed, or a low correction area with a low priority for correction of perspective distortion.

According to an embodiment of the disclosure, the at least one instruction executed by the at least one processor individually or collectively, may cause the electronic apparatus to determine a first area among the plurality of areas as the area of interest based on a first object in the first area comprising a face. The at least one instruction executed by the at least one processor individually or collectively, may cause the electronic apparatus to determine a second area among the plurality of areas as the maintenance area based on a second object in the second area comprising a geometric configuration. The geometric configuration may comprise at least one of a straight line, a curve, a polygon, a circle, or an ellipse. The at least one instruction executed by the at least one processor individually or collectively, may cause the electronic apparatus to determine a third area among the plurality of areas as the low correction area based on a third object in the third area comprising a repeating pattern.

According to an embodiment of the disclosure, the first mesh information may comprise first movement information and second movement information. The at least one instruction executed by the at least one processor individually or collectively, may cause the electronic apparatus to determine the first movement information such that a movement of a first pixel position in the area of interest is greater than a movement of a second pixel position in the low correction area. The at least one instruction executed by the at least one processor individually or collectively, may cause the electronic apparatus to determine the second movement information such that a movement of a third pixel position in the low correction area is greater than a movement of a fourth pixel position in the maintenance area.

According to an embodiment of the disclosure, the at least one instruction executed by the at least one processor individually or collectively, may cause the electronic apparatus to determine a vanishing point of the first image based on at least one of a field of view or a focal length of a lens through which the first image is captured. The at least one instruction executed by the at least one processor individually or collectively, may cause the electronic apparatus to generate the projection image based on the vanishing point by correcting the first image.

According to an embodiment of the disclosure, the first mesh information may comprise a movement vector. The at least one instruction executed by the at least one processor individually or collectively, may cause the electronic apparatus to divide each of the first image and the projection image into a plurality of blocks. The at least one instruction executed by the at least one processor individually or collectively, may cause the electronic apparatus to determine the movement vector based on a first block of the first image and a second block of the projection image corresponding to the first block.

According to an embodiment of the disclosure, the at least one instruction executed by the at least one processor individually or collectively, may cause the electronic apparatus to generate a second image by correcting the first image based on the first mesh information. The at least one instruction executed by the at least one processor individually or collectively, may cause the electronic apparatus to identify whether the second image comprises a blank area. The at least one instruction executed by the at least one processor individually or collectively, may cause the electronic apparatus to determine a pixel of the blank area.

According to an embodiment of the disclosure, the at least one instruction executed by the at least one processor individually or collectively, may cause the electronic apparatus to determine depth information about an object in the first image. The at least one instruction executed by the at least one processor individually or collectively, may cause the electronic apparatus to generate the projection image based on the depth information.

According to an embodiment of the disclosure, the at least one instruction executed by the at least one processor individually or collectively, may cause the electronic apparatus to obtain a third image after the first image. The at least one instruction executed by the at least one processor individually or collectively, may cause the electronic apparatus to determine a motion vector between the third image and the first image. The at least one instruction executed by the at least one processor individually or collectively, may cause the electronic apparatus to generate second mesh information for the third image based on correcting the first mesh information by using the motion vector.

According to an embodiment of the disclosure, a computer-readable recording medium having recorded thereon a program for executing the at least one method on a computer is provided.

The method, performed by the electronic apparatus, of correcting image distortion, according to the disclosure, is a method to identify a face and/or a geometric element included in an image and may include, by using facial image data and/or geometric element image data as input data for an Al model, obtaining output data in which the face and/or the geometric element included in the image are identified. The Al model may be created through training. In this regard, creating the Al model through training means that an Al model is trained using a plurality of training data by a learning algorithm so that a predefined operation rule or Al model set to perform a wanted characteristic (or purpose) is created. The Al model may include a plurality of neural network layers. Each of the plurality of neural network layers has a plurality of weight values, and may perform a neural network operation using an operation result of a previous layer and an operation between the plurality of weight values.

Visual understanding is a technique of identifying and processing objects like human vision, and includes object recognition, object tracking, image retrieval, human recognition, scene recognition, spatial recognition (3D reconstruction/localization), or image enhancement, for example.

The method of correcting image distortion according to an embodiment of the disclosure may also be realized in a form of a recording medium including instructions executable by a computer, such as a program module executed by a computer. The computer-readable recording medium may be any available medium which is accessible by a computer, and may include a volatile or nonvolatile medium and a detachable or non-detachable medium. The computer-readable recording medium may include a computer storage medium and a communication medium. Examples of the computer storage medium include all volatile and nonvolatile media and separable and non-separable media, which have been implemented by an arbitrary method or technology, for storing information such as computer-readable instructions, data structures, program modules, and other data. The communication medium may include other data of a modulated data signal, such as a computer-readable instruction, a data structure, or a program module.

A computer-readable storage medium according to an embodiment of the disclosure may be provided in the form of a non-transitory storage medium. In this regard, the "non-transitory storage medium" simply means that the storage medium is a tangible apparatus and does not include a signal (for example, an electromagnetic wave), but this term does not differentiate between where data is semi-permanently stored in the storage medium and where the data is temporarily stored in the storage medium. For example, the "non-transitory storage medium" may include a buffer in which data is temporarily stored.

The method according to an embodiment of the disclosure may be included and provided in a computer program product. The computer program product may be traded as a product between a seller and a buyer. The computer program product may be distributed in the form of a machine-readable storage medium (for example, a CD-ROM), or distributed (for example, downloaded or uploaded) through an application store, or directly or online between two user apparatuses (for example, smart phones). At least a portion of a computer program product (for example, a downloadable application) may be temporarily stored in a machine-readable storage medium, such as memory of a manufacturer's server, an application store's server, or a relay server, or may be temporarily generated.

The above description of the disclosure is provided for illustration, and it will be understood by one of ordinary skill in the art that various changes in form and details may be readily made therein without departing from essential features and the scope of the disclosure as defined by the following claims. Therefore, it should be understood that the embodiments of the disclosure described above should be considered in a descriptive sense only and not for purposes of limitation. For example, each component described in a single type may be executed in a distributed manner, and components described distributed may also be executed in an integrated form.

The scope of the disclosure is not defined by the detailed description of the disclosure but by the following claims, and all modifications or alternatives derived from the scope and spirit of the claims and equivalents thereof fall within the scope of the disclosure.

## Claims

1. A method, performed by an electronic apparatus, of correcting image distortion, comprising:
obtaining a first image (S210);
generating a projection image based on the first image, in which perspective distortion of the first image is corrected (S220);
generating a cognitive map according to a plurality of objects in the first image, wherein the cognitive map divides the first image into a plurality of areas of a first plurality of types (S230);
generating first mesh information for correcting the first image based on the projection image and the cognitive map, wherein the first mesh information comprises movement information for a plurality of pixel positions (S240); and
generating an output image by correcting the first image based on the first mesh information (S250),
wherein the movement information is determined at different levels according to the first plurality of types.

2. The method of claim 1, wherein the plurality of areas correspond to the plurality of objects, and
wherein the generating the cognitive map (S230) comprises:
identifying the plurality of objects in the first image;
extracting the plurality of areas;
determining the first plurality of types based on a second plurality of types of the plurality of objects; and
generating the cognitive map based on the first plurality of types.

3. The method of claim 2, wherein the cognitive map comprises at least one of an area of interest with a high priority for correction of perspective distortion, a maintenance area in which no correction for perspective distortion is performed, or a low correction area with a low priority for correction of perspective distortion.

4. The method of claim 3, wherein the determining the first plurality of types comprises:
determining a first area among the plurality of areas as the area of interest based on a first object in the first area comprising a face;
determining a second area among the plurality of areas as the maintenance area based on a second object in the second area comprising a geometric configuration, wherein the geometric configuration comprises at least one of a straight line, a curve, a polygon, a circle, or an ellipse; and
determining a third area among the plurality of areas as the low correction area based on a third object in the third area comprising a repeating pattern.

5. The method of claim 4, wherein the first mesh information comprises first movement information and second movement information, and
wherein the generating the first mesh information comprises:
determining the first movement information such that a movement of a first pixel position in the area of interest is greater than a movement of a second pixel position in the low correction area; and
determining the second movement information such that a movement of a third pixel position in the low correction area is greater than a movement of a fourth pixel position in the maintenance area.

6. The method of at least one of claims 1 to 5, wherein the generating the projection image (S220) comprises:
determining a vanishing point of the first image based on at least one of a field of view or a focal length of a lens through which the first image is captured; and
generating the projection image based on the vanishing point by correcting the first image.

7. The method of any one of claims 1 to 6, wherein the first mesh information comprises a movement vector, and
wherein the generating the first mesh information comprises:
dividing each of the first image and the projection image into a plurality of blocks; and
determining the movement vector based on a first block of the first image and a second block of the projection image corresponding to the first block.

8. The method of any one of claims 1 to 7, wherein the generating the output image (S250) comprises:
generating a second image by correcting the first image based on the first mesh information;
identifying whether the second image comprises a blank area; and
determining a pixel of the blank area.

9. The method of any one of claims 1 to 8, wherein the generating the projection image comprises:
determining depth information about an object in the first image; and
generating the projection image based on the depth information.

10. The method of any one of claims 1 to 9, further comprising:
obtaining a third image after the first image;
determining a motion vector between the third image and the first image; and
generating second mesh information for the third image based on correcting the first mesh information by using the motion vector.

11. An electronic apparatus for correcting image distortion, comprising:
at least one processor (1410) including processing circuitry,
memory(1420) comprising one or more storage medium storing at least one instruction that, when executed by the at least one processor (1410) individually or collectively, cause the electronic apparatus to:
obtain a first image;
generate a projection image based on the first image in which perspective distortion of the first image is corrected;
generate a cognitive map according to a plurality of objects in the first image, wherein the cognitive map divides the first image into a plurality of areas of a first plurality of types;
generate first mesh information for correcting the first image based on the projection image and the cognitive map, wherein the first mesh information comprises movement information for a plurality of pixel positions; and
generate an output image by correcting the first image based on the first mesh information,
wherein the movement information is determined at different levels according to the first plurality of types.

12. The electronic apparatus of claim 11, wherein the plurality of areas correspond to the plurality of objects, and
wherein the at least one instruction executed by the at least one processor (1410) individually or collectively, cause the electronic apparatus to:
identify the plurality of objects in the first image;
extract the plurality of areas;
determine the first plurality of types based on a second plurality of types of the plurality of objects; and
generate the cognitive map based on the first plurality of types.

13. The electronic apparatus of claim 12, wherein the cognitive map comprises at least one of an area of interest with a high priority for correction of perspective distortion, a maintenance area in which no correction for perspective distortion is performed, or a low correction area with a low priority for correction of perspective distortion.

14. The electronic apparatus of claim 13, wherein the at least one instruction executed by the at least one processor (1410) individually or collectively, cause the electronic apparatus to:
determine a first area among the plurality of areas as the area of interest based on a first object in the first area comprising a face;
determine a second area among the plurality of areas as the maintenance area based on a second object in the second area comprising a geometric configuration, wherein the geometric configuration comprises at least one of a straight line, a curve, a polygon, a circle, or an ellipse; and
determine a third area among the plurality of areas as the low correction area based on a third object in the third area comprising a repeating pattern.

15. A computer-readable recording medium having recorded thereon a program for executing, on a computer, the method of any one of claims 1 to 10.
